# FASCICULE DE BREVET EUROPEEN

(11) **EP 4 544 909 B1**
(45) Date de publication et mention de la délivrance du brevet: **03.06.2026**
(21) Numéro de dépôt: 24202064.2
(22) Date de dépôt: 23.09.2024
(51) Int. Cl.: A01M 7/00

(54) **SYSTÈME DE PULVÉRISATION AGRICOLE UTILISANT UN LIQUIDE DE RINÇAGE COMME LIQUIDE PORTEUR DE PRODUIT ACTIF**
LANDWIRTSCHAFTLICHES SPRÜHSYSTEM MIT SPÜLFLÜSSIGKEIT ALS WIRKSTOFFTRÄGERFLÜSSIGKEIT
AGRICULTURAL SPRAYING SYSTEM USING A RINSING LIQUID AS A LIQUID CARRYING AN ACTIVE PRODUCT

(30) Priorité: 26.10.2023 FR 2311675
(43) Date de publication de la demande: 30.04.2025
(73) Titulaire: Exel Industries, 51200 Epernay (FR)
(72) Inventeur: BACLE, Thibault, 69003 LYON (FR); PARLANT, Mathieu, 51200 EPERNAY (FR)
(74) Mandataire: Bandpay & Greuter

(56) Documents cités:
- EP-A1- 3 114 930
- EP-A1- 3 818 825
- DE-A1- 102017 220 002
- US-A1- 2006 086 296
- US-A1- 2023 019 528

## Description

### DOMAINE TECHNIQUE

La présente invention concerne le domaine technique des systèmes de pulvérisation agricole.

Plus particulièrement, l'invention concerne le rinçage d'un système de pulvérisation agricole et la réutilisation d'un liquide ayant servi pour ledit rinçage.

### ETAT DE LA TECHNIQUE

Il est connu de l'état de la technique un système de pulvérisation agricole d'un produit actif tel qu'un liquide phytosanitaire, par exemple porté sur un engin agricole circulant dans des rangs de cultures végétales. Un tel système comprend notamment un ensemble de pulvérisation, formé par exemple à partir d'une rampe et d'une pluralité de buses de pulvérisation configurées pour pulvériser le liquide phytosanitaire. Un tel liquide est généralement stocké dans un réservoir, et pour être pulvérisé sur les cultures à traiter, le liquide phytosanitaire est incorporé à un liquide porteur, généralement de l'eau, dans des proportions prédéterminées et précises. Avantageusement, il est connu de réaliser l'incorporation avant le début d'une opération de pulvérisation, c'est-à-dire avant le départ de l'engin agricole vers les rangs de cultures végétales à pulvériser. Le système de pulvérisation et l'engin agricole embarquent alors une quantité définie de mélange, dont la concentration est définie et sensiblement constante.

Lorsque l'opération de pulvérisation est terminée et que le réservoir est vidé de son produit actif, il est nécessaire, pour des raisons réglementaires, de nettoyer le réservoir de produit actif et les conduites du système de pulvérisation agricole afin d'éliminer des résidus de produits actifs stagnants. En effet, du produit actif stagnant dans les conduites peut dégrader la durée de vie du système de pulvérisation agricole. De fait, il est connu de l'état de la technique un système de pulvérisation agricole comprenant en outre un circuit pneumatique, ledit circuit pneumatique étant relié au réservoir et aux conduites, et configuré pour injecter un gaz tel que de l'air de sorte à évacuer des résidus stagnants de produit phytosanitaire par les buses de l'ensemble de pulvérisation, notamment après une opération de rinçage à l'eau.

Un tel système de pulvérisation présente l'avantage d'améliorer l'efficacité du rinçage du réservoir, éliminant les résidus stagnants, évitant ainsi l'encrassage des conduites et du réservoir. En outre, on s'assure également de ne pas altérer l'équilibre chimique d'un produit actif destiné à être pulvérisé ultérieurement avec le même système de pulvérisation.

Néanmoins, les résidus évacués sont également pulvérisés sur les cultures végétales qui ont déjà reçu une dose adéquate de produit actif, ce qui représente un gaspillage de produit actif, diminuant ainsi la rentabilité du système de pulvérisation. Par ailleurs, lors de la réutilisation du matériel pour une nouvelle opération de pulvérisation de cultures végétales différentes à l'aide d'un produit actif différent, la présence de résidus, même en faible quantité, présente un risque de phytotoxicité pour lesdites cultures végétales.

Un système de pulvérisation correspondant est connu du document EP 3 818 825 A1.

L'invention vise à résoudre tout ou partie des inconvénients de l'état de la technique, en proposant un système de pulvérisation permettant d'éviter le gaspillage de résidus de produits actifs.

### PRESENTATION DE L'INVENTION

Plus précisément, l'invention a pour objet un système de pulvérisation agricole, comprenant :
- au moins un réservoir configuré pour contenir un produit actif, le réservoir étant relié à une première portion d'une première conduite avale configurée pour acheminer le produit actif du réservoir vers au moins une zone de mélange d'un ensemble de pulvérisation du système de pulvérisation ;
- une première cuve configurée pour contenir un liquide clair, la première cuve étant reliée à une première conduite amont configurée pour acheminer du liquide clair de la première cuve vers le réservoir de sorte que le liquide clair rince le réservoir, formant un liquide gris à partir de résidus de produit actif mélangés au liquide clair.

Le système est remarquable en ce que la première conduite avale comprend un organe de régulation configuré pour diriger, par l'intermédiaire d'une deuxième portion de la première conduite avale, le liquide gris vers au moins une deuxième cuve configurée pour contenir le liquide gris, la deuxième cuve étant reliée à une deuxième conduite avale configurée pour acheminer le liquide gris de la deuxième cuve vers la zone de mélange en amont de l'ensemble de pulvérisation, de sorte que le liquide gris assure la fonction de liquide porteur dans lequel le produit actif est mélangé, le liquide gris incorporant le produit actif étant destiné à être pulvérisé par l'ensemble de pulvérisation.

Par le vocable « liquide clair », on entend un liquide dépourvu de tout produit actif circulant dans le système de pulvérisation agricole, par exemple de l'eau.

Par le vocable « liquide gris », on entend un liquide comprenant une concentration de produit actif très nettement inférieure à la concentration de produit actif incorporé à un liquide porteur, de sorte que son utilisation ne perturbe pas le dosage du mélange. Par exemple, la concentration en produit actif dans le « liquide gris » est au moins 1000 fois, de préférence au moins 10000 fois inférieure à ce qu'elle est dans le mélange pulvérisé. Dans le réservoir, on parle de liquide gris dès l'instant où le liquide clair entre en contact avec des résidus de produit actif.

Par « réservoir », on entend tout contenant de produit actif, notamment potentiellement tout type de bidon standard disponible dans le commerce et contenant du produit actif. Le vocable « réservoir » couvre également un réservoir dans lequel du produit actif serait transféré, notamment à partir d'un bidon.

Grâce à une telle combinaison de caractéristiques, les conduites et réservoirs d'un tel système de pulvérisation présentent l'avantage de pouvoir être rincés de manière efficace par l'intermédiaire du liquide clair, ce qui permet de préserver les composants du système de pulvérisation agricole, et de ne pas altérer l'équilibre chimique d'un produit actif circulant ultérieurement dans les réservoirs et conduites.

Avantageusement, la première cuve est reliée à une deuxième conduite amont configurée pour acheminer du liquide clair de la première cuve vers la deuxième cuve. Dans une telle configuration, on peut garantir un volume de liquide gris suffisant pour assurer la fonction de liquide porteur, notamment en complétant un volume libre de la deuxième cuve avec du liquide clair. De préférence, le volume de la première cuve est supérieur au volume de la deuxième cuve.

Avantageusement, la première cuve est pressurisée par l'intermédiaire d'un organe de pression de la première cuve configuré pour piloter un écoulement de liquide clair vers la première conduite amont et un écoulement de liquide clair vers la deuxième conduite amont. Dans une telle configuration, il est possible de garantir la présence d'un volume de liquide clair minimum dans la deuxième cuve, de sorte que la concentration de résidus de produits actifs dans le liquide gris de la deuxième cuve soit très nettement inférieure à une concentration de référence. La première cuve peut avantageusement comprendre plus d'un organe de pression, par exemple de sorte qu'un autre organe de pression soit configuré pour piloter un écoulement de liquide clair de la première cuve vers la deuxième cuve.

Avantageusement, le réservoir est pressurisé par l'intermédiaire d'un organe de pression du réservoir configuré pour piloter un écoulement de produit actif du réservoir vers la première portion de la première conduite avale et/ou un écoulement de liquide gris du réservoir vers la deuxième portion de la première conduite avale. Dans une telle configuration, il est possible de maitriser le débit de produit actif acheminé vers la zone de mélange, permettant un dosage précis. En outre, lorsque le réservoir est en cours de rinçage, il est également possible de maitriser le débit de liquide gris acheminé vers la deuxième cuve.

Avantageusement, la première conduite amont est reliée directement à la première conduite avale en amont de l'organe de régulation, la première conduite amont comprenant une vanne d'arrêt configurée pour autoriser l'acheminement du liquide clair de la première conduite amont directement vers la première conduite avale de sorte que le liquide clair rince la première conduite avale, formant le liquide gris à partir de résidus de produit actif mélangés au liquide clair. Dans une telle configuration, il est possible de rincer directement la conduite avale, sans que le liquide n'ait préalablement circulé dans le ou les réservoirs, renforçant l'efficacité du rinçage.

Avantageusement, la deuxième cuve est reliée à une conduite de recirculation.

Avantageusement, le système comprend au moins deux réservoirs. Dans une telle configuration, l'utilisation de chaque réservoir est indépendante des autres réservoirs. Par exemple, le rinçage d'un réservoir et la pulvérisation de produit actif issu d'un autre réservoir peuvent être réalisés de manière simultanée. Ainsi, du liquide gris assurant la fonction de liquide porteur peut être formé concomitamment à une opération de pulvérisation.

Selon un mode de réalisation, il est possible d'anticiper la fin de l'opération de pulvérisation et d'entamer un rinçage de la deuxième cuve. Ainsi, à l'approche de la fin du chantier, c'est-à-dire lorsque l'opération de pulvérisation d'une parcelle est presque achevée, on vide progressivement la deuxième cuve contenant le liquide gris, de sorte qu'elle soit vide ou quasiment vide à la fin du chantier. Il est entendu que pour être vidée, la deuxième cuve n'est plus alimentée en liquide gris par la première conduite avale.

Avantageusement, les premières portions des premières conduites avales reliées à chaque réservoir étant convergentes en amont de la zone de mélange de l'ensemble de pulvérisation et les deuxièmes portions des premières conduites avales étant convergentes en amont de la deuxième cuve. Dans une telle configuration, l'architecture de la première conduite avale en amont de la zone de mélange est simplifiée et présente une meilleure compacité.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique d'un système de pulvérisation agricole selon un premier mode de réalisation de l'invention, dans une configuration initiale ;
La figure 2 est une représentation schématique d'un système de pulvérisation agricole selon un deuxième mode de réalisation de l'invention, dans une configuration initiale ;
La figure 3 est une représentation schématique du système de pulvérisation agricole de la figure 2 dans une première configuration d'exploitation ;
La figure 4 est une représentation schématique du système de pulvérisation agricole de la figure 2 dans une deuxième configuration d'exploitation ;
La figure 5 est une représentation schématique du système de pulvérisation agricole de la figure 2 dans une troisième configuration d'exploitation ;
La figure 6 est une représentation schématique du système de pulvérisation agricole de la figure 2 dans une quatrième configuration d'exploitation ;
La figure 7 est une représentation schématique du système de pulvérisation agricole de la figure 2 dans une cinquième configuration d'exploitation ;
La figure 8 est une représentation schématique du système de pulvérisation agricole de la figure 2 dans une configuration finale.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

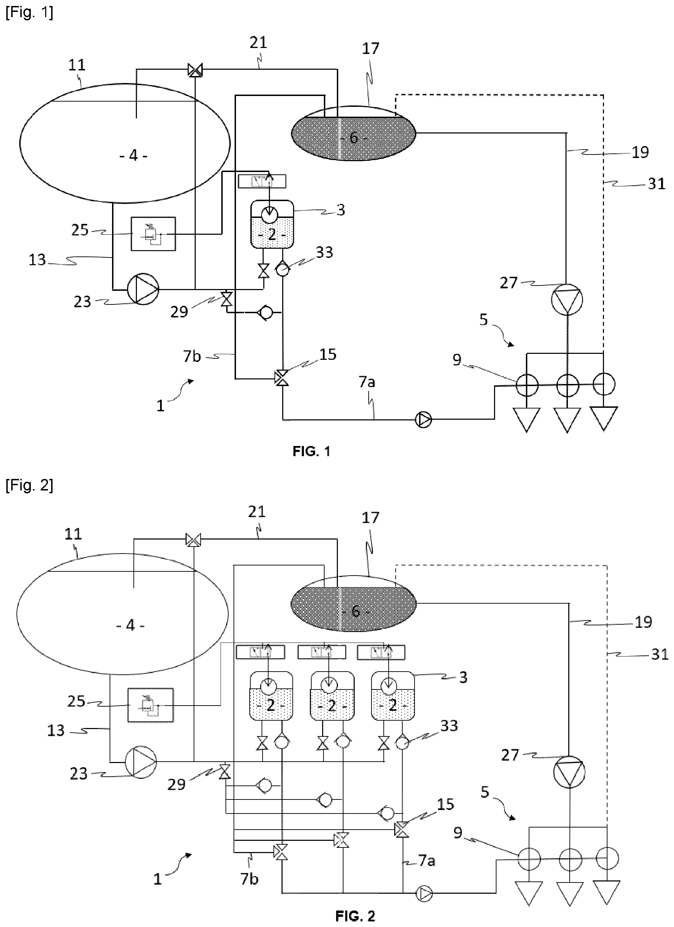

L'invention concerne un système de pulvérisation agricole 1 illustré selon un premier mode de réalisation sur la figure 1. Le système de pulvérisation agricole 1 est par exemple embarqué à bord d'un engin agricole circulant dans des parcelles de cultures végétales.

Le système de pulvérisation 1 comprend au moins un premier réservoir 3 configuré pour contenir un produit actif 2, notamment un produit de traitement phytosanitaire pour des cultures végétales. Le réservoir 3 est relié à une première portion 7a d'une première conduite avale configurée pour acheminer le produit actif 2 du réservoir 3 vers au moins une zone de mélange 9 d'un ensemble de pulvérisation 5. L'ensemble de pulvérisation 5 comprend avantageusement une rampe de pulvérisation ainsi qu'une pluralité de buses configurées pour pulvériser le produit actif 2 incorporé dans un liquide porteur. Le réservoir 3 présente une configuration de pulvérisation pour réaliser une opération de pulvérisation, et présente une configuration de rinçage pour faire l'objet d'une opération de rinçage, partiel ou total.

Le système de pulvérisation 1 comprend également une première cuve 11 configurée pour contenir un liquide clair 4. Le liquide clair 4 est un liquide dépourvu de tout produit actif 2, par exemple de l'eau. La première cuve 11 est reliée à une première conduite amont 13 configurée pour acheminer du liquide clair 4 de la première cuve 11 vers le réservoir 3 pour une opération de rinçage. Lors d'une telle opération, le réservoir 3 ne contient qu'une fraction minoritaire de produit actif 2, c'est à dire des résidus de produit actif 2 présents sur des parois du réservoir 3. Lors d'un tel rinçage, un liquide gris 6 est formé à partir des résidus de produit actif 2 mélangés au liquide clair 4. Le liquide est dit liquide gris 6 dès l'instant où le liquide clair 4 entre en contact avec les résidus de produit actif 2. Avantageusement, la première conduite amont 13 comprend une vanne d'arrêt configurée pour autoriser le passage du liquide clair 4 vers le réservoir 3 uniquement lorsque le réservoir 3 ne contient plus que des résidus de produit actif 2.

La première conduite avale comprend un organe de régulation 15 configuré pour diriger, par l'intermédiaire d'une deuxième portion 7b de la première conduite avale, le liquide gris 6 vers une deuxième cuve 17 configurée pour contenir le liquide gris 6. Autrement dit, l'organe de régulation 15 dans une configuration de pulvérisation, dirige le produit actif 2 vers la zone de mélange 9 par l'intermédiaire de la première portion 7a de la première conduite avale et dirige dans une configuration de rinçage le liquide gris 6 vers la deuxième cuve 17. Lors d'une opération de pulvérisation, la deuxième cuve 17 peut avantageusement contenir du liquide gris 6 formé au cours d'une opération de rinçage antérieure.

La deuxième cuve 17 est par ailleurs reliée à une deuxième conduite avale 19 configurée pour acheminer le liquide gris 6 vers la zone de mélange 9, en amont de l'ensemble de pulvérisation 5. Le liquide gris 6 assure alors la fonction de liquide porteur dans lequel le produit actif 2 est mélangé, le liquide gris 6 incorporant le produit actif 2 destiné à être pulvérisé par l'ensemble de pulvérisation 5.

Les conduites et le réservoir 3 d'un tel système de pulvérisation présentent l'avantage de pouvoir être rincés de manière efficace par l'intermédiaire du liquide clair 4, ce qui permet de préserver les composants du système de pulvérisation agricole 1, et de ne pas altérer l'équilibre chimique d'un produit actif 2 circulant ultérieurement dans le réservoir 3 et les conduites, pouvant notamment entrainer des risques de phytotoxicité. Enfin, le système de pulvérisation agricole 1 permet d'utiliser en priorité un liquide gris 6, avant de consommer du liquide clair 4, permettant une meilleure gestion du stock de liquide clair 4.

Dans le mode de réalisation décrit, la première cuve 11 est par ailleurs avantageusement reliée à une deuxième conduite amont 21 configurée pour acheminer du liquide clair 4 de la première cuve 11 vers la deuxième cuve 17. Ainsi, on peut garantir un volume de liquide gris 6 suffisant pour assurer la fonction de liquide porteur, notamment en complétant un volume libre de la deuxième cuve 17 avec du liquide clair 4, de sorte que la concentration en résidus de produit actif 2 soit très nettement inférieure à la concentration de produit actif 2 dans le liquide porteur. De préférence, le volume de la première cuve 11 est supérieur au volume de la deuxième cuve 17.

Dans le mode de réalisation décrit, le réservoir 3 est avantageusement pressurisé par l'intermédiaire d'un organe de pression 25 du réservoir 3. En configuration de pulvérisation, l'organe de pression 25 est configuré pour piloter un écoulement de produit actif 2 du réservoir 3 vers la première portion 7a de la première conduite avale lorsque le système de pulvérisation 1 est en configuration de pulvérisation.

Selon un mode de réalisation, le réservoir 3 est équipé d'un dispositif de fermeture coopérant avec l'organe de pression 25 du réservoir 3 et avec une membrane apte à s'expandre et à se contracter à l'intérieur du réservoir 3, la membrane étant gonflée de sorte à imposer une surpression à l'intérieur du réservoir 3 pour engendrer l'écoulement de produit actif 2 sortant du réservoir 3 en configuration de pulvérisation.

En configuration de rinçage, l'organe de pression 23 est également configuré pour piloter un écoulement de liquide gris 6 quittant le réservoir 3 vers la deuxième portion 7b de la première conduite avale. Ainsi, il est possible de maitriser le débit de produit actif 2 acheminé vers la zone de mélange 9, avec un autre réservoir 3 que le réservoir 3 en cours de rinçage. En outre, lorsque le réservoir 3 est en cours de rinçage, il est également possible de maitriser le débit de liquide gris 6 acheminé vers la deuxième cuve 17.

Dans le mode de réalisation décrit, la première cuve 11 est avantageusement pressurisée par l'intermédiaire d'un organe de pression 23 de la première cuve 11 configuré pour piloter un écoulement de liquide clair 4 vers la première conduite amont 13 et un écoulement de liquide clair 4 vers la deuxième conduite amont 21.

Dans le mode de réalisation décrit, la deuxième cuve 17 est avantageusement pressurisée par l'intermédiaire d'un organe de pression 27 de la deuxième cuve 17 configuré pour piloter un écoulement de liquide gris 6 vers la deuxième conduite avale 19. Le débit de l'écoulement de liquide gris 6 piloté par l'organe de pression 27 de la deuxième cuve 17 peut avantageusement être supérieur à la somme du débit de l'écoulement du liquide clair 4 piloté par l'organe de pression 23 de la première cuve 11 et du débit de l'écoulement de liquide gris 6 piloté par l'organe de pression 25 du réservoir 3. Ainsi, le liquide gris 6 présente un débit nécessaire pour incorporer le produit actif 2 dans la zone de mélange 9 et pour acheminer le liquide gris 6 dans l'ensemble de pulvérisation 5.

Dans le mode de réalisation décrit, la première conduite amont 13 est avantageusement reliée directement à la première conduite avale, en amont de l'organe de régulation 15, c'est-à-dire avant la séparation entre les deux embranchements distincts que forment la première portion 7a et la deuxième portion 7b. La première conduite amont 13 comprend alors une vanne d'arrêt 29. La vanne d'arrêt 29 est configurée pour autoriser l'acheminement de liquide clair 4 directement de la première conduite amont 13 vers la première conduite avale, de sorte que le liquide clair 4 rince la première conduite avale. Ici, la deuxième cuve 17 comprend avantageusement une conduite de recirculation 31.

La figure 2 illustre le système de pulvérisation agricole 1 selon un deuxième mode de réalisation. Le mode de réalisation de la figure 2 diffère du mode de réalisation de la figure 1 notamment en ce qu'il comprend au moins deux réservoirs 3, ici trois réservoirs 3. Dans ce mode de réalisation, l'utilisation de chaque réservoir 3 est indépendante des autres réservoirs 3. Par exemple, le rinçage d'un réservoir 3 et la pulvérisation de produit actif 2 issu d'un autre réservoir 3 peuvent être réalisés de manière simultanée. Cette configuration présente l'avantage de permettre la formation de liquide gris 6 à partir du rinçage d'un réservoir 3 donné pour assurer la fonction de liquide porteur concomitamment à une opération de pulvérisation nécessitant l'acheminement de produit actif 2 à partir d'un réservoir 3 non-vide.

Dans le mode de réalisation décrit, les premières portions 7a des premières conduites avales sont convergentes en amont de la zone de mélange 9 et les deuxièmes portions 7b des premières conduites avales sont convergentes en amont de la deuxième cuve 17. Dans une telle configuration, l'architecture de la première conduite avale en amont de la zone de mélange 9 est simplifiée et présente une meilleure compacité.

La suite de la description s'attache à détailler le principe de fonctionnement du système de pulvérisation agricole 1. Sur la figure 1 et sur la figure 2, le système de pulvérisation 1 est dans une configuration initiale, c'est-à-dire une configuration antérieure à toute opération de pulvérisation de parcelle de cultures végétales et toute opération de rinçage. La première cuve 11 est remplie de liquide clair 4. La deuxième cuve 17 est initialement remplie de liquide gris 6 formé lors d'une opération de rinçage antérieure du système de pulvérisation ou de liquide clair 4. Les réservoirs 3 sont remplis de produit actif 2.

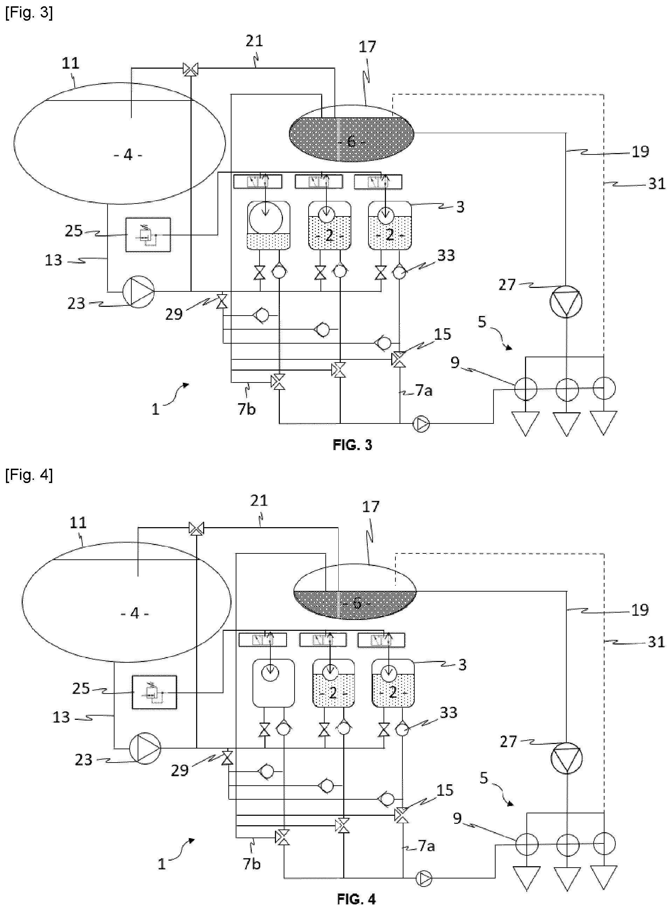

La figure 3 illustre le système de pulvérisation agricole 1 dans une première configuration. Ici, le produit actif 2 est acheminé depuis un premier réservoir 3 vers la zone de mélange 9 par l'intermédiaire de la première conduite avale. L'organe de régulation 15 dirige le produit actif 2 vers la première portion 7a. En parallèle, la deuxième conduite avale 19 achemine le liquide gris 6 vers la zone de mélange 9 de l'ensemble de pulvérisation 5. Le produit actif 2 est incorporé au liquide gris 6 dans la zone de mélange 9 et est prêt à être pulvérisé.

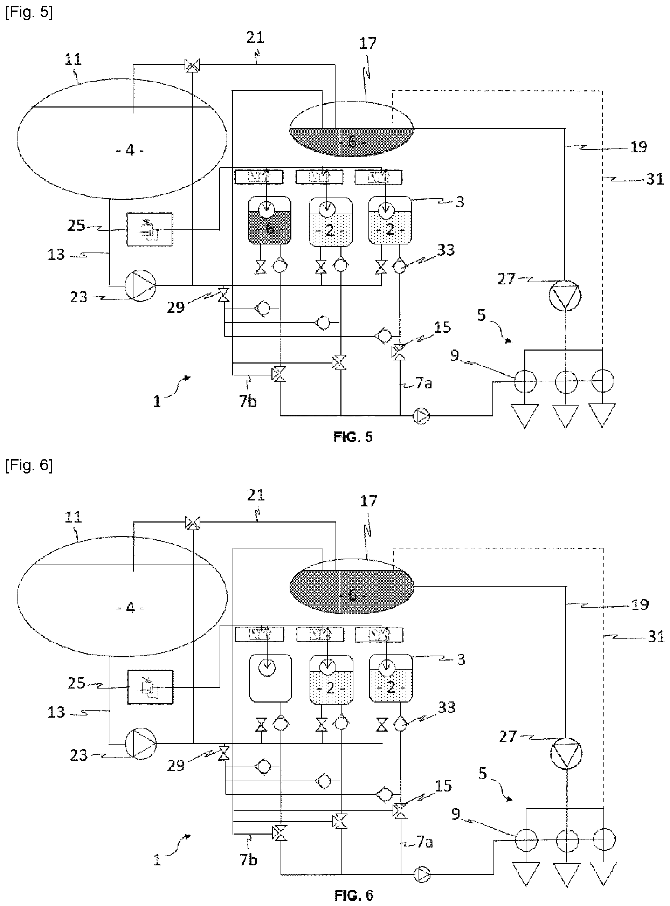

La figure 4 illustre le système de pulvérisation agricole 1 dans une deuxième configuration. Ici, le premier réservoir 3 est vidé, et ne contient plus que des résidus de produit actif 2. La première conduite achemine alors le liquide clair 4 vers le premier réservoir 3, formant le liquide gris 6 lorsque le liquide clair 4 entre en contact avec les résidus de produit actif 2, comme illustré sur la figure 5 dans une troisième configuration du système de pulvérisation agricole 1. La figure 6 illustre le système de pulvérisation agricole 1 dans une quatrième configuration. Le liquide clair 4 rince les parois du premier réservoir 3 et est acheminé vers la première conduite avale. L'organe de régulation 15 dirige le liquide gris 6 issu du rinçage du premier réservoir 3 vers la deuxième portion 7b, vers la deuxième cuve 17. Il est à noter que dans le cas où le système de pulvérisation 1 comprend au moins deux réservoirs 3, le produit actif du deuxième réservoir 3 peut être acheminé vers la zone de mélange 9 de manière concomitante à l'opération de rinçage décrite sur la figure 6, comme expliqué précédemment.

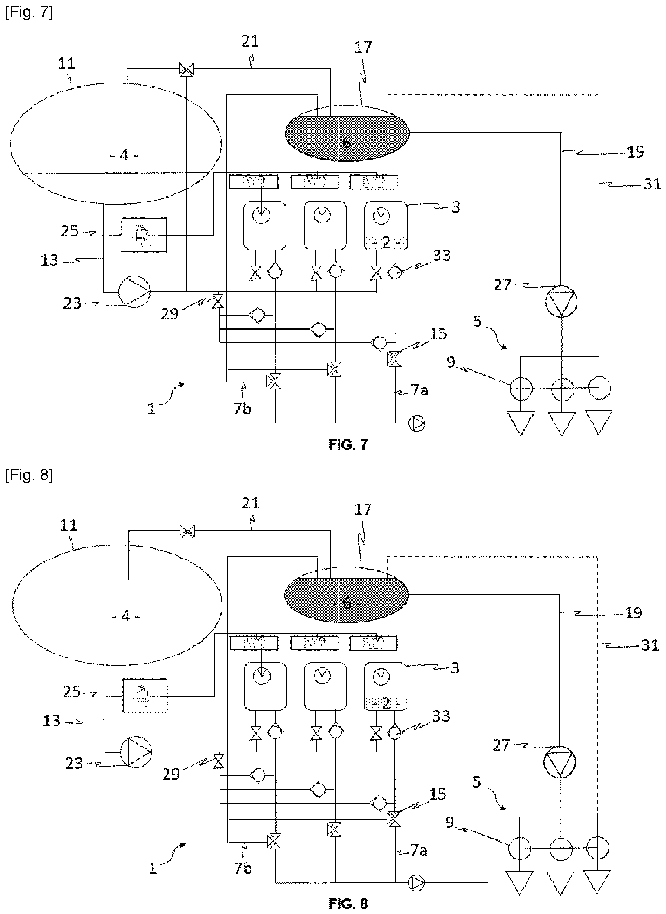

La figure 7 illustre le système de pulvérisation agricole 1 dans une cinquième configuration. Ici, l'opération de pulvérisation est terminée. Les premiers et deuxièmes réservoirs 3 sont vidés et rincés, et un excédent de produit actif 2 est conservé dans le troisième réservoir 3, qui pourra être utilisé au cours d'une prochaine opération de pulvérisation. Comme expliqué précédemment, il est nécessaire de reconstituer un stock satisfaisant de liquide gris 6 pour ladite prochaine opération de pulvérisation. Ainsi, la deuxième conduite amont 21 achemine du liquide clair 4 directement vers la deuxième cuve 17, comme illustré sur la figure 8, dans une configuration finale du système de pulvérisation agricole 1. Le liquide gris 6 est alors dilué à l'aide de liquide clair 4 directement dans la deuxième cuve 17, que l'on peut remplir jusqu'à son volume maximum.

On notera par ailleurs que l'invention n'est pas limitée aux modes de réalisation décrit précédemment. Il apparaîtra en effet à l'homme du métier que diverses modifications peuvent être apportées au mode de réalisation décrit ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme du métier en appliquant ses connaissances générales à la mise en oeuvre de l'enseignement qui vient de lui être divulgué.

## Revendications

1. Système (1) de pulvérisation agricole, comprenant :
- au moins un réservoir (3) configuré pour contenir un produit actif (2), le réservoir (3) étant relié à une première portion (7a) d'une première conduite avale configurée pour acheminer le produit actif (2) du réservoir (3) vers au moins une zone de mélange (9) d'un ensemble de pulvérisation (5) du système (1) de pulvérisation ;
- une première cuve (11) configurée pour contenir un liquide clair (4), la première cuve (11) étant reliée à une première conduite amont (13) configurée pour acheminer du liquide clair (4) de la première cuve (11) vers le réservoir (3) de sorte que le liquide clair (4) rince le réservoir (3), formant un liquide gris (6) à partir de résidus de produit actif (2) mélangés au liquide clair (4) ;
le système (1) étant **caractérisé en ce que** la première conduite avale comprend un organe de régulation (15) configuré pour diriger, par l'intermédiaire d'une deuxième portion (7b) de la première conduite avale , le liquide gris (6) vers au moins une deuxième cuve (17) configurée pour contenir le liquide gris (6), la deuxième cuve (17) étant reliée à une deuxième conduite avale (19) configurée pour acheminer le liquide gris (6) de la deuxième cuve (17) vers la zone de mélange (9) en amont de l'ensemble de pulvérisation (5), de sorte que le liquide gris (6) assure la fonction de liquide porteur dans lequel le produit actif (2) est mélangé, le liquide gris (6) incorporant le produit actif (2) étant destiné à être pulvérisé par l'ensemble de pulvérisation (5).

2. Système (1) de pulvérisation selon la revendication 1, dans lequel la première cuve (11) est reliée à une deuxième conduite amont (21) configurée pour acheminer du liquide clair (4) de la première cuve (11) vers la deuxième cuve (17).

3. Système (1) de pulvérisation selon la revendication 2, dans lequel la première cuve (11) est pressurisée par l'intermédiaire d'un organe de pression (23) de la première cuve (11) configuré pour piloter un écoulement de liquide clair (4) vers la première conduite amont (13) et un écoulement de liquide clair (4) vers la deuxième conduite amont (21).

4. Système (1) de pulvérisation selon la revendication 3, dans lequel le réservoir (3) est pressurisé par l'intermédiaire d'un organe de pression (25) du réservoir (3) configuré pour piloter un écoulement de produit actif (2) du réservoir (3) vers la première portion (7a) de la première conduite avale et/ou un écoulement de liquide gris (6) du réservoir (3) vers la deuxième portion (7b) de la première conduite avale.

5. Système (1) de pulvérisation selon l'une quelconque des revendications précédentes, dans lequel la première conduite amont (13) est reliée directement à la première conduite avale en amont de l'organe de régulation (15), la première conduite amont (13) comprenant une vanne d'arrêt (29) configurée pour autoriser l'acheminement du liquide clair (4) de la première conduite amont (13) directement vers la première conduite avale de sorte que le liquide clair (4) rince la première conduite avale , formant le liquide gris (6) à partir de résidus de produit actif (2) mélangés au liquide clair (4).

6. Système (1) de pulvérisation selon la revendication 5, dans lequel la deuxième cuve (17) est reliée à une conduite de recirculation (31).

7. Système (1) de pulvérisation selon l'une quelconque des revendications précédentes, comprenant au moins deux réservoirs (3).

8. Système (1) de pulvérisation selon la revendication 7, dans lequel les premières portions des premières conduites avales reliées à chaque réservoir (3) étant convergentes en amont de la zone de mélange (9) de l'ensemble de pulvérisation (5) et les deuxièmes portions des premières conduites avales étant convergentes en amont de la deuxième cuve (17).

## Patentansprüche

1. Landwirtschaftliches Sprühsystem (1), umfassend:
- mindestens einen Behälter (3), der dafür konfiguriert ist, einen Wirkstoff (2) zu enthalten, wobei der Behälter (3) mit einem ersten Abschnitt (7a) einer ersten abstromseitigen Leitung verbunden ist, die dafür konfiguriert ist, den Wirkstoff (2) aus dem Behälter (3) zu mindestens einer Mischzone (9) einer Sprühanordnung (5) des Sprühsystems (1) zu befördern;
- einen ersten Tank (11), der dafür konfiguriert ist, eine klare Flüssigkeit (4) zu enthalten, wobei der erste Tank (11) mit einer ersten aufstromseitigen Leitung (13) verbunden ist, die dafür konfiguriert ist, klare Flüssigkeit (4) aus dem ersten Tank (11) zu dem Behälter (3) zu befördern, so dass die klare Flüssigkeit (4) den Behälter (3) spült, wobei aus Rückständen des mit der klaren Flüssigkeit (4) vermischten Wirkstoffs (2) eine graue Flüssigkeit (6) gebildet wird,
wobei das System (1) **dadurch gekennzeichnet ist, dass** die erste abstromseitige Leitung ein Regelelement (15) umfasst, das dafür konfiguriert ist, über einen zweiten Abschnitt (7b) der ersten abstromseitigen Leitung die graue Flüssigkeit (6) zu mindestens einem zweiten Tank (17) zu leiten, der dafür konfiguriert ist, die graue Flüssigkeit (6) zu enthalten, wobei der zweite Tank (17) mit einer zweiten abstromseitigen Leitung (19) verbunden ist, die dafür konfiguriert ist, die graue Flüssigkeit (6) aus dem zweiten Tank (17) zu der Mischzone (9) stromaufwärts der Sprühanordnung (5) zu befördern, so dass die graue Flüssigkeit (6) die Funktion einer Trägerflüssigkeit erfüllt, in welcher der Wirkstoff (2) gemischt ist, wobei die den Wirkstoff (2) enthaltende graue Flüssigkeit (6) dazu bestimmt ist, durch die Sprühanordnung (5) versprüht zu werden.

2. Sprühsystem (1) nach Anspruch 1, wobei der erste Tank (11) mit einer zweiten aufstromseitigen Leitung (21) verbunden ist, die dafür konfiguriert ist, klare Flüssigkeit (4) aus dem ersten Tank (11) zu dem zweiten Tank (17) zu befördern.

3. Sprühsystem (1) nach Anspruch 2, wobei der erste Tank (11) über ein Druckelement (23) des ersten Tanks (11) unter Druck gesetzt wird, das dafür konfiguriert ist, einen Strom klarer Flüssigkeit (4) zu der ersten aufstromseitigen Leitung (13) und einen Strom klarer Flüssigkeit (4) zu der zweiten aufstromseitigen Leitung (21) zu lenken.

4. Sprühsystem (1) nach Anspruch 3, wobei der Behälter (3) über ein Druckelement (25) des Behälters (3) unter Druck gesetzt ist, das dafür konfiguriert ist, einen Strom des Wirkstoffs (2) aus dem Behälter (3) zu dem ersten Abschnitt (7a) der ersten abstromseitigen Leitung und/oder einen Strom der grauen Flüssigkeit (6) aus dem Behälter (3) zu dem zweiten Abschnitt (7b) der ersten abstromseitigen Leitung zu lenken.

5. Sprühsystem (1) nach einem der vorhergehenden Ansprüche, wobei die erste aufstromseitige Leitung (13) direkt mit der ersten abstromseitigen Leitung stromaufwärts des Regelelements (15) verbunden ist, wobei die erste aufstromseitige Leitung (13) ein Absperrventil (29) umfasst, das dafür konfiguriert ist, die Beförderung der klaren Flüssigkeit (4) aus der ersten aufstromseitigen Leitung (13) direkt zu der ersten abstromseitigen Leitung zu erlauben, so dass die klare Flüssigkeit (4) die erste abstromseitige Leitung spült, wobei die graue Flüssigkeit (6) aus Rückständen des mit der klaren Flüssigkeit (4) vermischten Wirkstoff (2) gebildet wird.

6. Sprühsystem (1) nach Anspruch 5, wobei der zweite Tank (17) mit einer Rezirkulationsleitung (31) verbunden ist.

7. Sprühsystem (1) nach einem der vorhergehenden Ansprüche, das mindestens zwei Behälter (3) umfasst.

8. Sprühsystem (1) nach Anspruch 7, wobei die ersten Abschnitte der ersten abstromseitigen Leitungen, die mit jedem Behälter (3) verbunden sind, stromaufwärts der Mischzone (9) der Sprühanordnung (5) zusammengeführt sind und die zweiten Abschnitte der ersten abstromseitigen Leitungen stromaufwärts des zweiten Tanks (17) zusammengeführt sind.

## Claims

1. An agricultural spraying system (1), comprising:
- at least one reservoir (3) configured to contain an active product (2), the reservoir (3) being connected to a first portion (7a) of a first downstream duct configured to convey the active product (2) from the reservoir (3) to at least one mixing area (9) of a spraying assembly (5) of the spraying system (1);
- a first tank (11) configured to contain a clear liquid (4), the first tank (11) being connected to a first upstream duct (13) configured to convey clear liquid (4) from the first tank (11) to the reservoir (3) so that the clear liquid (4) flushes the reservoir (3), forming a grey liquid (6) from residues of active product (2) mixed with the clear liquid (4);
the system (1) being **characterized in that** the first downstream duct comprises a regulating element (15) configured to direct, by means of a second portion (7b) of the first downstream duct, the grey liquid (6) to at least one second tank (17) configured to contain the grey liquid (6), the second tank (17) being connected to a second downstream duct (19) configured to convey the grey liquid (6) from the second tank (17) to the mixing area (9) upstream of the spraying assembly (5), such that the grey liquid (6) provides the function of carrier liquid in which the active product (2) is mixed, the grey liquid (6) incorporating the active product (2) being intended to be sprayed by the spraying assembly (5).

2. The spraying system (1) according to claim 1, wherein the first tank (11) is connected to a second upstream duct (21) configured to convey clear liquid (4) from the first tank (11) to the second tank (17).

3. The spraying system (1) according to claim 2, wherein the first tank (11) is pressurized by means of a pressure member (23) of the first tank (11) configured to drive a flow of clear liquid (4) to the first upstream duct (13) and a flow of clear liquid (4) to the second upstream duct (21).

4. The spraying system (1) according to claim 3, wherein the reservoir (3) is pressurized by means of a pressure member (25) of the reservoir (3) configured to drive a flow of active product (2) from the reservoir (3) to the first portion (7a) of the first downstream duct and/or a flow of grey liquid (6) from the reservoir (3) to the second portion (7b) of the first downstream duct.

5. The spraying system (1) according to any one of the preceding claims, wherein the first upstream duct (13) is connected directly to the first downstream duct, upstream of the regulating element (15), the first upstream duct (13) comprising a stop valve (29) configured to allow the clear liquid (4) from the first upstream duct (13) to be conveyed directly to the first downstream duct so that the clear liquid (4) flushes the first downstream duct, forming the grey liquid (6) from residues of active product (2) mixed with the clear liquid (4).

6. The spraying system (1) according to claim 5, wherein the second tank (17) is connected to a recirculation duct (31).

7. The spraying system (1) according to any one of the preceding claims, comprising at least two reservoirs (3).

8. The spraying system (1) according to claim 7, wherein the first portions of the first downstream ducts connected to each reservoir (3) being convergent upstream of the mixing area (9) of the spraying assembly (5) and the second portions of the first downstream ducts being convergent upstream of the second tank (17).
